# FASCICULE DE BREVET EUROPEEN

(11) **EP 3 091 736 B1**
(45) Date de publication et mention de la délivrance du brevet: **04.11.2020**
(21) Numéro de dépôt: 15290126.0
(22) Date de dépôt: 05.05.2015
(51) Int. Cl.: H04N 7/18, B61L 99/00, B61L 23/04, G06T 1/00

(54) **SÉCURISATION D'UNE ACQUISITION VIDÉO DISTANTE EN TEMPS RÉEL**
SICHERUNG EINER FERN-VIDEO-ERFASSUNG IN ECHTZEIT
SECURING A REMOTE VIDEO ACQUISITION IN REAL TIME

(43) Date de publication de la demande: 09.11.2016
(73) Titulaire: Siemens Mobility S.A.S., 92320 Châtillon (FR)
(72) Inventeur: Chenu, Eric, 92370 Chaville (FR)
(74) Mandataire: Deffner, Rolf

(56) Documents cités:
- EP-A1- 2 012 269
- EP-A2- 2 341 710
- US-A1- 2009 310 865
- US-A1- 2011 194 726
- US-B1- 7 342 489
- HSU C-T ET AL: "DCT-BASED WATERMARKING FOR VIDEO", IEEE TRANSACTIONS ON CONSUMER ELECTRONICS, IEEE SERVICE CENTER, NEW YORK, NY, US, vol. 44, no. 1, 1 février 1998 (1998-02-01), pages 206-216, XP000779269, ISSN: 0098-3063, DOI: 10.1109/30.663749

## Description

La présente invention concerne une méthode et un système de sécurisation d'un système vidéo de visualisation en temps réel et à distance d'images prises par une caméra dudit système vidéo. En particulier, la présente invention concerne la sécurisation d'un flux vidéo transmis sur un réseau de communication en vue de garantir l'authenticité des images observées au sens de la sureté de fonctionnement, i.e. afin de garantir au moins l'origine, l'intégrité et la fraicheur temporelle de ladite vidéo visualisée à distance par un opérateur sur un écran de contrôle.

En particulier, la présente invention se rapporte au domaine des véhicules guidés nécessitant un contrôle à distance au moyen d'au moins une caméra embarquée comprenant un récepteur photosensible, ledit contrôle à distance devant être caractérisé par un haut niveau de sécurité de fonctionnement. Par « véhicule guidé », il est fait référence aux moyens de transport en commun tels que des bus, trolleybus, tramways, métros, trains ou unités de train, etc., et aux moyens de transport de charge tel que, par exemple, les ponts roulants, pour lesquels l'aspect sécuritaire est très important. En particulier, l'invention se rapporte au domaine ferroviaire, notamment aux moyens de transport équipés d'un système de contrôle basé sur une communication à distance, par exemple les trains équipés d'un système de contrôle de trains par radio, communément appelé "Communication Based Train Control" (CBTC) .

La présente invention permet notamment une conduite à distance d'un véhicule guidé. En effet, il est connu de l'homme du métier qu'une série d'images successives d'un objet prises par une caméra peut être transmise à distance afin d'être visualisées en temps réel à un emplacement éloigné dudit objet. Ainsi, une caméra embarquée dans un véhicule est apte à filmer un objet, par exemple une scène intérieure ou extérieure au véhicule, et à coopérer avec un dispositif de communication d'images vidéo comprenant un émetteur/récepteur apte à transmettre depuis le véhicule un signal vidéo de l'objet filmé à un émetteur/récepteur au sol apte à réceptionner ledit signal vidéo, et à coopérer avec un dispositif de visualisation afin de visualiser ledit objet filmé à partir dudit signal vidéo réceptionné. Des images peuvent ainsi être prises par ladite caméra embarquée afin d'être visualisées à distance par un opérateur au moyen dudit dispositif de visualisation. Cependant, la présente invention ne se restreint pas au domaine des véhicules guidés, mais est également applicable ou utilisable dans l'industrie, par exemple pour superviser un processus industriel critique ou bien pour toute autre tâche exigeant un haut niveau de confiance et de pertinence concernant l'image observée par un opérateur.

Un système vidéo tel que décrit précédemment et comprenant une caméra, un dispositif de communication d'une image acquise par la caméra à un dispositif de visualisation distant de la caméra, peut connaître des dysfonctionnements potentiellement dangereux par exemple pour la conduite à distance d'un véhicule guidé.

En effet, l'image d'un objet prise par un récepteur photosensible de la caméra et sa visualisation à distance, i.e. ladite image dudit objet visualisée à distance, peuvent être différentes. En effet, des dysfonctions du système vidéo peuvent conduire à une non-conformité de l'image visualisée à distance et de l'image de l'objet tel que filmé et capturé par le récepteur photosensible de la caméra. De nombreuses sources d'erreurs peuvent par exemple modifier un contenu et/ou un séquençage des images acquises et traitées par un système vidéo: des erreurs peuvent provenir de la caméra, du dispositif de transmission, du dispositif de réception, ou du dispositif de visualisation. Ainsi, lesdites erreurs peuvent survenir à différents niveaux, que ce soit par exemple lors d'un traitement d'une image vidéo, lors de la transmission d'un signal vidéo correspondant à ladite image ou lors de son affichage, et altérer conséquemment l'image visualisée.

De plus, diverses manipulations sur les images d'un film vidéo peuvent provoquer des perturbations plus ou moins importantes sur son affichage et donc sa visualisation. Ces manipulations peuvent par exemple être dictées par les besoins d'un traitement d'image (comme la compression, le filtrage, le codage, l'échantillonnage, etc.). Egalement, des erreurs ou des défauts observés sur une image transmise numériquement peuvent provenir de paramètres de compression utilisés par un codeur vidéo nécessaire à la numérisation de l'image, ou du réseau utilisé par le dispositif de communication pour transmettre le signal vidéo.

Il est connu de l'homme du métier d'encoder dans un signal vidéo des messages ou informations. Par exemple, Le document EP 2 341 710 A2 décrit une technique permettant de vérifier que des signaux vidéo codés provenant de plusieurs sources soient chacun transmis à un moniteur prédéfini dans un temps n'excédant pas une limite prédéfinie et le document US 2011/194726 A1 décrit un système de watermarking pour encoder un message dans une image sous une forme binaire en utilisant deux motifs, un pour "1" et un pour "0".

Un but de la présente invention , dont l'objet est défini par les revendications attenantes, est de proposer une méthode et un système simples, sûrs et fiables, de sécurisation d'une transmission à distance par un système vidéo d'une image d'un objet ou d'une scène destinée à être capturée par une caméra dudit système vidéo, ledit système et ladite méthode de sécurisation étant adaptables à tout type de systèmes vidéos, et aptes à garantir la sûreté dudit système vidéo, en particulier en étant capable de sécuriser une correspondance en temps réel de l'image dudit objet visualisée à distance et de l'image dudit objet prise par le récepteur photosensible d'une caméra du système vidéo.

Un autre but de la présente invention est en particulier de signaler à un opérateur éloigné dudit objet toutes les dysfonctions et sources d'erreurs précitées.

Par correspondance entre l'image d'un objet visualisée à distance et l'image dudit objet filmé par le récepteur photosensible de la caméra, il est notamment fait référence à la conformité de l'image visualisée (ou affichée) à distance à un temps t₂ = t+Δt et représentant ledit objet au temps t, avec l'image dudit objet prise par le récepteur photosensible au temps t₁ = t et représentant ledit objet au temps t. En d'autres termes, la présente invention doit permettre de décider si l'image d'un objet prise par le récepteur photosensible au temps t₁ est identique, à grandissement égal, à l'image du même objet affichée à distance au temps t₂. Ainsi, une image d'un objet destinée à être visualisée à distance sera considérée comme identique à une image dudit objet destinée à être capturée par un récepteur photosensible, si chacune des deux images représente le même objet, i.e. l'objet au même temps t et si l'intervalle de temps Δt ne dépasse pas une valeur prédéfinie, par exemple 0.5 seconde.

Dans ce but, une méthode, un dispositif et un système sont proposés par le contenu des revendications 1, 5 et 8 Un ensemble de sous-revendications présente également des avantages de l'invention.

La présente invention propose une méthode de sécurisation, en particulier en temps réel, d'un système vidéo destiné à transmettre et visualiser à distance une image d'une scène capturée par une caméra, ledit système vidéo comprenant un dispositif de capture d'une image de ladite scène au moyen de ladite caméra, un dispositif de communication pour transmettre ladite image à un poste éloigné, et un dispositif de visualisation pour visualiser ladite image audit poste éloigné, ladite méthode étant caractérisée par les étapes suivantes:
- une génération, préférentiellement en temps réel, au moyen d'un premier calculateur de sécurité, et pour ladite image, d'un marqueur codé digitalement en bits, ledit marqueur codé comprenant au moins une information codée en binaire permettant d'identifier la caméra (ci-après dénommée « l'identifiant de la caméra ») ayant pris ladite image et une information codée en binaire permettant d'identifier, à partir d'une référence temporelle, la date à laquelle l'image a été prise par la caméra (ci-après dénommée « la variable temporelle »), ledit premier calculateur de sécurité étant configuré pour synchroniser avec un second calculateur de sécurité ladite référence temporelle;
- une insertion, préférentiellement en temps réel, dudit marqueur codé dans l'image prise par la caméra afin de créer une image sécurisée destinée à être transmise par le dispositif de communication du système vidéo au dispositif de visualisation, l'insertion dans ladite image étant réalisée par ajout, dans le domaine spatial et pour chaque bit dudit marqueur codé, d'un motif à ladite image, ledit motif étant caractérisé en ce que sa conversion dans le domaine spectral est une matrice (ci-après dénommée « sous-matrice », car sa dimension est celle d'un bloc de la matrice obtenue en transformant ladite image dans le domaine spectral. Il s'agit donc, en considérant sa dimension, d'une sous-matrice de la matrice de l'image dans le domaine spectral) prédéfinie dont au moins un coefficient fréquentiel encode ledit bit du marqueur codé;
- une transmission, préférentiellement en temps réel, via le dispositif de communication du système vidéo, .de l'image sécurisée au dispositif de visualisation, ladite image sécurisée pouvant être transformée et/ou compressée pour faciliter sa transmission;
- une réception, préférentiellement en temps réel, par le dispositif de visualisation de ladite image sécurisée, et une acquisition de cette dernière par un dispositif d'acquisition coopérant avec un dispositif d'extraction, notamment avant sa visualisation au moyen du dispositif de visualisation;
- une extraction, préférentiellement en temps réel, de ladite image sécurisée, dudit marqueur codé et une transmission dudit marqueur codé ainsi extrait audit second calculateur, notamment avant visualisation de l'image sécurisée au moyen du dispositif de visualisation;
- une vérification par ledit second calculateur de sécurité, préférentiellement en temps réel et notamment avant visualisation de l'image sécurisée au moyen du dispositif de visualisation, de la variable temporelle par comparaison avec ladite référence temporelle et de l'identifiant de la caméra inclus dans le marqueur codé afin de contrôler la fraicheur temporelle de l'image sécurisée et son ordonnancement par rapport à d'autres images sécurisées reçues;
- un signalement d'une défaillance du système vidéo si au moins une des informations comprises dans le marqueur codé viole un critère de sécurité prédéfini, notamment parmi les critères de sécurité prédéfinis suivants :
- une différence temporelle Δt entre la variable temporelle et la référence temporelle est inférieure à une valeur prédéfinie : en effet, le second calculateur de sécurité est capable de déterminer si la différence temporelle entre la variable temporelle et la référence temporelle excède ladite valeur prédéfinie, et de signaler un tel excès;
- l'identifiant de la caméra extrait de l'image sécurisée est identique à l'identifiant de la caméra ayant prise l'image: en effet, ledit second calculateur comprend par exemple une base de données permettant de déterminer l'identifiant de la caméra filmant une scène ou un objet spécifique, et est capable de comparer l'identifiant de la caméra déterminé à partir de la base de données à celui extrait du marqueur codé. En cas de divergence, i.e. si le critère de sécurité est violé, le signalement d'une défaillance est automatiquement déclenché. Optionnellement, l'identifiant de la caméra extrait du marqueur codé d'une image sécurisée d'une scène ou objet peut en outre être comparé, par ledit second calculateur de sécurité, à un identifiant de caméra précédemment extrait d'un marqueur codé d'une autre image sécurisée pour la même scène, et un signalement d'une défaillance est automatiquement déclenché en cas de divergence;
- le marqueur codé est complet, i.e. extrait dans son intégrité de l'image sécurisée: en effet, ledit second calculateur de sécurité est en particulier capable de déterminer si des bits dudit marqueur codé manquent dans l'image sécurisée, par exemple, parce qu'une redondance dudit marqueur sécurisé dans ladite image sécurisée est manquante et/ou parce que des bits dudit marqueur codé sont absents de l'image sécurisée, ledit second calculateur de sécurité étant capable dans ce cas de déterminer une défaillance de l'intégrité de l'image sécurisée et d'automatiquement déclencher un signalement de ladite défaillance.

La méthode selon l'invention convient ainsi à la sécurisation de la transmission à distance de ladite image dudit objet ou scène par ledit système vidéo. Le marqueur codé peut être inséré optiquement à l'entrée de la caméra en utilisant lesdits motifs dans le domaine spatial, ou directement aux données de l'image brute obtenue à la sortie du récepteur photosensible de la caméra, i.e. avant transformation ou modification desdites données de l'image brute obtenue en sortie du récepteur photosensible.

La présente invention propose également un dispositif de sécurisation, notamment en temps réel, d'une transmission à distance d'une image d'un objet ou scène destinée à être prise par une caméra d'un dispositif de capture d'image d'un système vidéo, p.ex. par un récepteur photosensible de la caméra, ledit système vidéo étant destiné à la transmission et la visualisation à distance de ladite image dudit objet ou scène, ledit dispositif de sécurisation étant en particulier adapté audit système vidéo, i.e. configuré pour coopérer avec ce dernier, et caractérisé en ce qu'il comprend:
- un premier calculateur de sécurité destiné à coopérer avec la caméra et préférentiellement à être embarqué avec cette dernière, par exemple à bord d'un véhicule guidé, ledit premier calculateur étant configuré pour coopérer avec un second calculateur de sécurité distant, lesdits premier et second calculateurs de sécurité sont préférentiellement constitués de processeurs redondants (i.e. configurés pour accomplir une fonction de sécurisation identique), par exemple selon une redondance du type 2oo2 ou 2oo3, lesdits premier et second calculateurs de sécurité étant en particulier des processeurs sécuritaires capables de garantir la sécurité par codage des traitements et des données (par exemple, un calculateur sécuritaire du type DIGISAFE), ledit premier calculateur étant configuré notamment pour échanger un ou plusieurs messages codés avec ledit second calculateur via un dispositif de communication afin de synchroniser une référence temporelle (par exemple une date). En particulier, ledit dispositif de communication servant à l'échange des messages codés entre le premier et le second calculateur de sécurité peut être ledit dispositif de communication du système vidéo, ou bien, selon un autre mode de réalisation de la présente invention, un dispositif de communication indépendant et séparé dudit dispositif de communication du système vidéo. Préférentiellement, ledit premier calculateur de sécurité est capable d'utiliser le dispositif de communication du système vidéo pour échanger lesdits messages codés. Ledit premier calculateur de sécurité est en outre configuré pour produire ou générer, notamment en temps réel, un marqueur codé digitalement en bits et comprenant au moins l'identifiant de la caméra et une variable temporelle définie par rapport à ladite référence temporelle, ledit marqueur codé étant en particulier protégé par un code garantissant un niveau de sécurité prédéfini, en particulier un premier groupe de bits du marqueur codé correspond à l'identifiant de la caméra, un deuxième groupe de bits du marqueur codé correspond à la variable temporelle, et optionnellement, un troisième groupe de bits du marqueur codé correspond à une redondance codée de l'identifiant de la caméra et de la variable temporelle. Cette redondance codée peut être préférentiellement calculée par codage arithmétique, ou par division/multiplication polynomiale, ou par la combinaison de ces techniques;
- un dispositif d'insertion, notamment en temps réel, du marqueur codé dans l'image prise par la caméra, ledit dispositif d'insertion étant configuré pour insérer ledit marqueur codé dans ladite image encodée dans le domaine spatial, ledit dispositif d'insertion comprenant notamment une bibliothèque de motifs dans le domaine spatial, chaque motif dans le domaine spatial étant la transformée ou conversion dans le domaine spatial d'une sous-matrice dans le domaine spectral (i.e. fréquentiel), ladite sous-matrice étant prédéfinie ou pré-calculée notamment par le premier calculateur de sécurité pour encoder 1 bit (ou plusieurs bits) dans un (ou plusieurs) coefficient prédéfini de ladite sous-matrice, ladite sous-matrice est par exemple une matrice dont tous les coefficients fréquentiels sont zéro (i.e. une image noire dans le domaine spectral, i.e. d'intensité 0) sauf un nombre n de coefficients fréquentiels prédéfinis qui ont une valeur différente de zéro, ladite valeur étant choisie par ledit premier calculateur de sécurité afin de coder chacun des bits du marqueur codé dans un des n coefficients fréquentiels. Ledit dispositif d'insertion est ainsi capable d'insérer dans ladite image dans le domaine spatial et pour chaque bit dudit marqueur codé un motif dont la conversion dans le domaine spectral est ladite sous-matrice prédéfinie/précalculée dont au moins un coefficient fréquentiel encode un bit dudit marqueur codé. En particulier, ledit dispositif d'insertion est capable de sélectionner pour chaque bit du marqueur codé un motif encodant au moins ledit bit dans la sous-matrice correspondant audit motif dans le domaine spectral. Préférentiellement, ladite sélection est faite en fonction de la valeur du coefficient fréquentiel encodant ledit bit dans la sous-matrice correspondant audit motif et/ou de la valeur d'un coefficient fréquentiel de la matrice obtenue après conversion dans le domaine fréquentiel (ou spectral) de ladite image acquise par la caméra. Par exemple, ledit dispositif d'insertion est capable d'ajouter à une partie de l'image le motif dont la conversion dans le domaine spectral est une sous-matrice dont le coefficient fréquentiel encodant un bit dudit marqueur codé est la fréquence moyenne de ladite partie lorsque cette dernière est transformée dans le domaine spectral. En particulier, le même motif peut-être sélectionné pour plusieurs bits, la sous-matrice correspondant audit motif encodant dans ce cas plusieurs bits. Ledit dispositif d'insertion est ainsi capable d'insérer chacun desdits motifs sélectionnés dans ladite image dans le domaine spatial, afin d'encoder ledit marqueur codé dans ladite image de sorte à créer une image sécurisée destinée à être transmise par un dispositif de communication du système vidéo. Selon la présente invention, le marqueur codé peut-être inséré dans l'image digitalement (directement aux données de l'image brute obtenue en sortie du récepteur photosensible de la caméra) ou optiquement (en amont de la caméra : le motif étant dans ce cas optiquement superposé à l'image de l'objet ou scène avant d'être acquise par la caméra). Le dispositif d'insertion est finalement configuré pour transmettre ladite image sécurisée au dispositif de communication du système vidéo afin que cette dernière soit envoyée au dispositif de visualisation afin d'être visualisée par un opérateur à un poste de contrôle distant de la scène ou objet filmé. Préférentiellement, le dispositif d'insertion est connecté au dispositif de capture d'image de façon à pouvoir superposer ledit motif à ladite image de la caméra afin de former ladite image sécurisée qui est ensuite traitée par le dispositif de capture d'image du système vidéo comme s'il s'agissait d'une image provenant directement de la caméra et transmise à son dispositif de communication pour sa visualisation à distance audit poste de contrôle distant.

La présente invention propose également un dispositif de contrôle, préférentiellement en temps réel, d'une image sécurisée d'une scène ou objet permettant de contrôler que l'image sécurisée acquise et visualisée à distance à un temps t+Δt et représentant ladite scène ou objet correspond à une image de ladite scène ou objet acquise par une caméra d'un système vidéo à un temps t. Selon la présente invention, ladite image est susceptible d'être prise par un récepteur photosensible de la caméra d'un dispositif de capture d'images d'un système vidéo apte à permettre la transmission et visualisation à distance de ladite image dudit objet ou scène et est sécurisée par un marqueur codé. Ledit dispositif de contrôle selon l'invention est en particulier adapté audit système vidéo, et est caractérisé en ce qu'il comprend:
- un dispositif d'acquisition capable de recevoir ou acquérir, préférentiellement en temps réel, via un dispositif de communication du système vidéo, ladite image sécurisée;
- un dispositif d'extraction capable d'extraire de ladite image sécurisée ledit marqueur codé, par exemple par comparaison de l'image sécurisée avec une image de référence ou non sécurisée de ladite scène ou objet, ladite extraction étant réalisée préférentiellement en temps réel. Ledit dispositif d'extraction est de plus configuré pour transmettre ledit marqueur codé extrait de l'image sécurisée à un second calculateur de sécurité, ledit marqueur étant codé digitalement en bits et comprenant au moins un identifiant de la caméra et une variable temporelle;
- ledit second calculateur de sécurité configuré pour coopérer avec le dispositif de visualisation de ladite image sécurisée, ledit second calculateur étant configuré pour coopérer également avec un premier calculateur de sécurité avec lequel il est préférentiellement redondant (i.e. configurés pour accomplir une fonction de sécurisation identique), par exemple selon une redondance du type 2oo2 ou 2oo3, ou réalisés par codage de l'information, ledit second calculateur étant configuré pour échanger un ou plusieurs messages codés avec ledit premier calculateur via un dispositif de communication, p. ex. via le dispositif de communication du système vidéo, afin de synchroniser une référence temporelle (par exemple une date), ledit second calculateur de sécurité étant configuré pour vérifier, préférentiellement en temps réel et notamment avant affichage de l'image sécurisée par ledit dispositif de visualisation, le marqueur codé extrait de l'image sécurisée, ledit second calculateur de sécurité vérifiant au moins l'identifiant de la caméra et la variable temporelle afin de contrôler la fraicheur temporelle de l'image sécurisée et son ordonnancement par rapport à d'autres images sécurisées reçues. En particulier, la variable temporelle est vérifiée par comparaison de ladite variable temporelle avec la référence temporelle afin de déterminer une différence temporelle Δt séparant l'acquisition de l'image de la scène ou objet par la caméra et son affichage par le dispositif de visualisation, le second calculateur de sécurité étant configuré pour automatiquement envoyer un signal d'alerte destiné à prévenir un opérateur d'une défaillance du système vidéo, ledit signal d'alerte étant par exemple envoyé au dispositif de visualisation.

La présente invention concerne également un système de sécurisation, en particulier en temps réel, d'une transmission à distance d'une image d'un objet ou scène destinée à être capturée par un dispositif de capture d'images d'un système vidéo, ledit système de sécurisation comprenant ledit dispositif de sécurisation et ledit dispositif de détection, lesdits dispositifs de sécurisation et de détection étant destinés à coopérer l'un avec l'autre afin de permettre la sécurisation de la transmission de l'image dudit objet ou scène à un poste de contrôle distant dudit objet ou scène au moyen dudit système vidéo. Le dispositif de sécurisation et le dispositif de détection sont ainsi aptes à coopérer avec le système vidéo, comprenant par exemple :
- un dispositif de capture d'images comprenant une caméra, ledit dispositif de capture d'image pouvant par exemple être embarqué dans un véhicule ;
- un dispositif de visualisation pour visualiser à distance ladite image acquise par le dispositif de capture d'image ;
- un dispositif de communication comprenant par exemple un émetteur/récepteur connecté audit dispositif de capture d'image et un émetteur/récepteur connecté au dispositif de visualisation afin de permettre la transmission de ladite image entre le dispositif de capture d'image et le dispositif de visualisation ;
afin de sécuriser la transmission de l'image dudit objet ou scène prise par le dispositif de capture d'image et de garantir la conformité de l'image dudit objet ou scène prise par exemple par un récepteur photosensible d'une caméra du dispositif de capture d'image avec l'image dudit objet visualisée à distance au moyen du dispositif de visualisation, ladite sécurisation étant réalisée notamment en temps réel.

Ainsi, la présente invention est en particulier capable de garantir la conformité d'une image d'un objet ou scène prise par une caméra d'un système vidéo avec son affichage servant à la visualisation à distance dudit objet ou scène par superposition, dans le domaine spatial, de ladite image et de chacun desdits motifs afin de créer une image sécurisée comprenant un marqueur codé permettant de vérifier la fraîcheur de l'image visualisée à distance, et/ou son intégrité, et/ou sa provenance. Préférentiellement, ledit premier calculateur de sécurité est apte à produire une redondance codée binaire de l'identifiant de la camera et de la variable temporelle, cette redondance codée binaire étant produite par un codage arithmétique, ou bien par division et/ou multiplication polynomiale (CRC), ou encore par la combinaison de ces deux méthodes. De plus ledit premier calculateur est en particulier configuré pour étendre la longueur de ladite redondance (i.e. pour augmenter le nombre de bits du marqueur codé) afin de produire un code comprenant suffisamment de bits pour remplir un ensemble de sous-matrices dans le domaine fréquentiel qui, une fois converties dans le domaine spatial, créeront des motifs aptes à recouvrir une partie ou préférentiellement toute l'image par superposition avec cette dernière.

Selon un premier mode de réalisation, chaque motif est superposé optiquement à l'image optique de la scène ou objet avant acquisition par le récepteur photosensible de la caméra. Dans ce premier mode de réalisation, le dispositif d'insertion est capable de superposer optiquement deux images à l'entrée de la caméra, i.e. l'image dudit objet ou scène tel que normalement filmé par la caméra et une image comprenant les motifs destinés à encoder ledit marqueur codé pour ladite image de la scène ou objet. Dans ce cas, le récepteur photosensible transmettra directement un signal relatif à l'image sécurisée. Selon un autre mode de réalisation, chaque motif est ajouté digitalement aux données de l'image brute obtenue en sortie du récepteur photosensible de la caméra afin de créer, dans le domaine spatial, une image sécurisée correspondant à la superposition de chaque motif sélectionné pour encoder le marqueur codé et de l'image dudit objet ou scène acquise par la caméra.

Le dispositif de contrôle selon l'invention est apte à analyser l'information encodée par ledit marqueur codé dans l'image sécurisée afin de déterminer si l'image dudit objet ou scène affichable à distance par le dispositif de visualisation du système vidéo est conforme à l'image dudit objet ou scène capturée par le récepteur photosensible de la caméra. De plus, le dispositif de contrôle, notamment ledit second calculateur de sécurité, est en particulier apte à signaler, par exemple visuellement et/ou auditivement, une défaillance de la transmission à distance de l'image sécurisée dudit objet ou scène, en détectant par exemple une divergence de la conformité de l'image dudit objet ou scène acquise par la caméra et restituée à distance par un signal vidéo de l'image sécurisée transmis par le dispositif de communication au dispositif de visualisation.

Finalement, ledit second calculateur de sécurité est en particulier apte à coopérer avec ledit dispositif de visualisation du système vidéo afin de permettre par exemple la visualisation sur un même écran de ladite image sécurisée dudit objet ou scène, ou de ladite image obtenue après extraction du marqueur codé, et de la variable temporelle et/ou l'identifiant de la caméra.

Des exemples de réalisations et d'applications fournis à l'aide des figures suivantes aideront à mieux comprendre la présente invention.
- Figure 1: exemple de réalisation selon l'invention d'un système de sécurisation d'une transmission d'une image vidéo.
- Figure 2: exemple de motif selon l'invention.
- Figure 3: exemple d'image sécurisée selon l'invention.

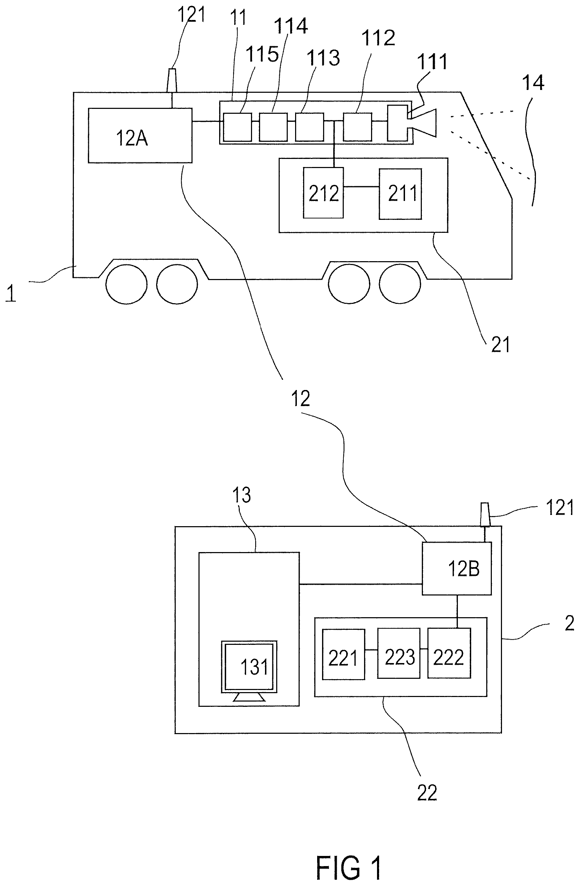

A titre d'exemple, la figure 1 montre un système de sécurisation adapté à la sécurisation d'une transmission, à distance, par un système vidéo d'une image d'une scène 14, ladite image étant en particulier destinée à agir sur un récepteur photosensible d'une caméra 111 d'un système d'acquisition 11 dudit système vidéo, et à servir par exemple au contrôle à distance d'un véhicule 1.

Ledit système vidéo comprend notamment:
- le dispositif de capture 11 d'une image d'une scène 14 au moyen par exemple d'une caméra 111 comprenant ledit récepteur photosensible, apte à être embarquée dans ledit véhicule 1 ou délocalisée par rapport à un poste de contrôle 2 distant, ledit récepteur photosensible étant apte à transformer un rayonnement lumineux en un signal vidéo;
- un dispositif de communication 12 apte à transmettre ledit signal vidéo dudit photorécepteur à un dispositif de visualisation 13. Ledit dispositif de communication 12 comprenant par exemple un émetteur/récepteur 12A destiné à être embarqué dans ledit véhicule 1, par exemple couplé au dispositif de capture 11 afin de transmettre ledit signal vidéo, par exemple au moyen d'une antenne 121 susceptible d'équiper ledit dispositif de communication et destinée à la transmission à distance dudit signal vidéo, et un émetteur/récepteur 12B destiné à être installé au poste de contrôle 2 pour la réception dudit signal vidéo au moyen d'une antenne 121;
- ledit dispositif de visualisation 13 apte à être couplé audit dispositif de communication 12, par exemple à son émetteur/récepteur 12B, et configuré pour traiter ledit signal vidéo en vue de l'affichage des images reçues, par exemple sur un écran 131.

En d'autres termes, ledit système vidéo est un système de vision à distance d'au moins une image prise par ledit dispositif de capture 11, ladite image étant destinée par exemple à permettre à un opérateur, situé dans le poste dé contrôle 2, de piloter à distance ledit véhicule 1 à partir d'une visualisation de l'affichage en temps réel de ladite image dudit objet au poste de contrôle 2. Ledit système de sécurisation selon l'invention est en particulier destiné à être couplé et à coopérer avec un tel système vidéo afin de garantir une correspondance entre une image dudit objet prise par le récepteur photosensible 11 à un temps t, et ladite image dudit objet affichable en temps réel à distance au moyen dudit dispositif de visualisation 13 à un temps t+Δt.

Le système de sécurisation selon l'invention comprend un dispositif de sécurisation 21 et un dispositif de contrôle 22 coopérant l'un avec l'autre afin de sécuriser la transmission de ladite image de la scène 14 au moyen du système vidéo. Le dispositif de sécurisation 21 comprend un premier calculateur 211 de sécurité destiné à coopérer avec le dispositif de capture 11 d'images du système vidéo afin de sécuriser lesdites images, et avec un second calculateur 221 de sécurité du dispositif de contrôle afin de synchroniser une référence temporelle et optionnellement, d'échanger une clé de sécurisation.

Ledit premier calculateur 211 est configuré pour produire un marqueur codé digitalement en bits comprenant au moins un identifiant de la caméra, une variable temporelle définie par rapport à ladite référence temporelle, et optionnellement une redondance de l'identifiant de la camera et de la variable temporelle produite par codage arithmétique ou par division/multiplication polynomial (CRC), ou une combinaison de ces deux dernières techniques. Le premier calculateur coopère avec un dispositif d'insertion 212 configuré pour insérer ledit marqueur codé dans l'image acquise par la caméra 111 du dispositif de capture 11 du système vidéo. Le dispositif d'insertion 212 est capable de créer une image sécurisée destinée à être transmise par le dispositif de communication 12 au dispositif de visualisation 13. Ledit dispositif d'insertion 212 est configuré pour insérer dans ladite image, dans le domaine spatial, et pour chaque bit dudit marqueur codé, un motif dont la conversion dans le domaine spectral est une sous-matrice prédéfinie dont au moins un coefficient fréquentiel encode ledit bit du marqueur codé. En d'autres termes, le dispositif d'insertion 212 est capable de créer une image sécurisée qui est la superposition de l'image acquise par ladite caméra et d'au moins un motif, chaque motif encodant au moins un bit dudit marqueur codé de façon à ce que ledit marqueur codé soit complètement encodé par l'ensemble des motifs destinés à être superposés à ladite image.

Préférentiellement, le dispositif d'insertion 212 comprend une bibliothèque de motifs pré-calculés et un module apte à choisir, notamment en temps réel, le ou les motifs en fonction des bits du marqueur codé et apte à additionner ou superposer, notamment en temps réel, lesdits motifs à l'image capturée par la caméra 111. Le dispositif d'insertion 212 comprend par exemple un FPGA ou un microcontrôleur connecté en sortie de la caméra 111 au flux d'images acquises, par ladite caméra 111. Préférentiellement, ledit FPGA où microcontrôleur est configuré pour communiquer avec ledit premier contrôleur 211 de sécurité et avec une mémoire du dispositif d'insertion 212 comprenant ladite bibliothèque de motifs. Le dispositif d'insertion 212, notamment son FPGA, est par exemple connecté en aval (i.e. après) d'un module de prétraitement 112 configuré pour la conversion A/D (Analogique/Digitale) des images acquises par la caméra, mais en amont (i.e. avant) de dispositifs de traitements de filtrage 113, de la transformé DCT ou Fourier 114 et de compression 115 desdites images (p. ex. MPEG) par rapport à une direction de transmission du signal vidéo en vue de la visualisation desdites images audit poste de contrôle 2. Après insertion dudit motif dans ladite image par le dispositif d'insertion, l'image obtenue est sécurisée et peut subir différents traitements d'images réalisés par le dispositif de capture 11 d'images du système vidéo avant d'être transmise ou dispositif de communication 12 pour sa transmission au poste de contrôle 2 distant.

Préférentiellement, les bits du marqueur codé sont répartis dans l'image de telle sorte que le marqueur codé inséré dans chaque image du flux vidéo provenant de ladite caméra 111 est uniquement extractible si l'intégralité des données constituant l'image sécurisée est traitée par ledit dispositif d'extraction 22. Ceci garantit en sécurité l'intégrité de l'image transmise. En particulier, le flux vidéo de la caméra 111 est sécurisé en insérant un marqueur codé suffisamment fréquemment dans les images constituant ledit flux vidéo, par exemple dans une image sur deux, ou moins fréquemment selon le besoin. Ainsi, il n'est pas nécessaire de sécuriser toutes les images du flux vidéo, mais d'en traiter un nombre suffisant pour qu'une corruption des images non marquées produise une détérioration clairement visible de la vidéo (par exemple apte à la rendre inutilisable). La variable temporelle insérée dans les images permet notamment de garantir l'ordonnancement correct des images observées ainsi que leur fraicheur temporelle. L'identifiant de la caméra permet de garantir et vérifier l'origine de l'image.

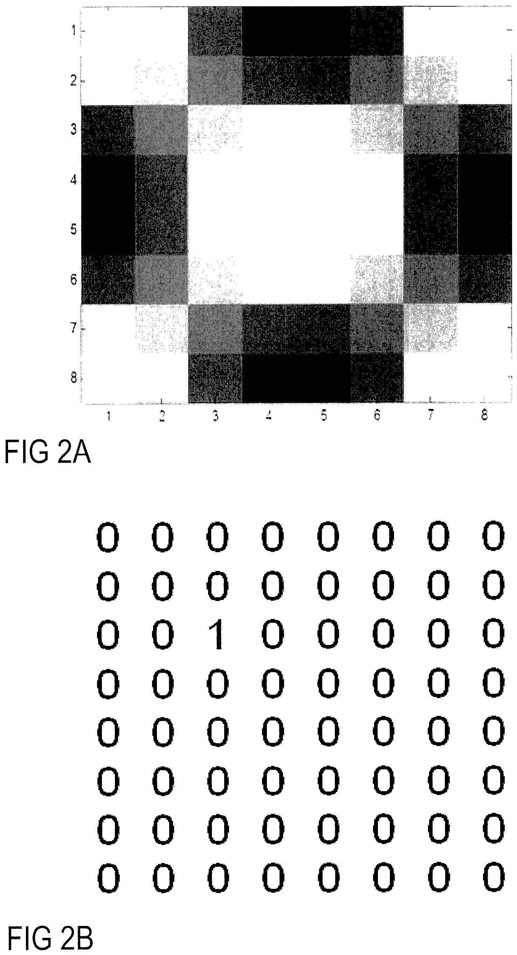

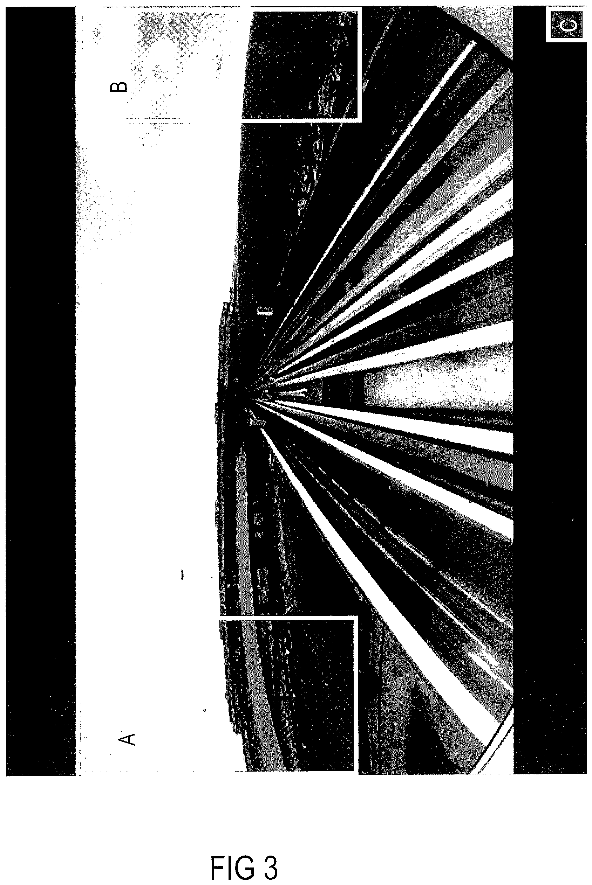

En particulier, les figures 2 et 3 présentent un exemple de motif selon l'invention et une image sécurisée selon l'invention par insertion dudit motif.

Selon la présente invention, la bibliothèque de motifs comprend un ensemble de motifs définis dans le domaine spatial (cf. Fig. 2A) correspondant à une sous-matrice dans le domaine spectral (cf. Fig. 2B) dont au moins un coefficient (par ex. le coefficient (3,3) de la matrice illustrée en Fig. 2B) a une valeur servant à encoder un bit du marqueur codé. La figure 2A montre ainsi une représentation spatiale d'un motif utilisé pour le codage de la valeur +1 sur le coefficient (3,3) d'une sous-matrice 8x8 représentée en Fig. 2B, représentant les coefficients fréquentiels allant des basses fréquences (coefficient (1,1) - en haute à gauche) aux hautes fréquences (coefficient (8,8) - en bas à droite). Préférentiellement, chaque sous-matrice correspondant à un motif de ladite bibliothèque dans le domaine spatial est une sous-matrice représentant une image noire dans le domaine spectral et dont au moins un coefficient fréquentiel est modifié pour encoder au moins un bit dudit marqueur codé.

Afin d'obtenir lesdits motifs, les sous-matrices correspondant auxdits motifs ont notamment été converties dans le plan spatial par ledit dispositif d'insertion 212, par exemple en utilisant une transformée DCT inverse, ou une transformée de Fourier ou en ondelette. Dès lors, un ensemble de motifs est obtenu et constitue ladite bibliothèque. Lesdits motifs peuvent être ajoutés à l'image dans le plan spatial (en pixel) par le dispositif d'insertion 212 en fonction du marqueur codé déterminé par le premier calculateur de sécurité 211. Lorsque l'image sécurisée, comprenant la superposition de l'image acquise par la caméra 111 et ledit motif, est transformée dans le plan spectral, un encodage du marqueur codé dans l'image dans le plan spectral sera obtenu. Un des avantages de la présente invention est le pré-calcul des motifs de la bibliothèque permettant une minimisation des traitements des images.

Selon la présente invention, ledit marqueur codé comprend un identifiant de la caméra 111 et une variable temporelle définie par rapport à une référence temporelle synchronisée entre ledit premier calculateur 211 et un second calculateur 221, et optionnellement une redondance codée de l'identifiant et de la variable temporelle. Les bits du marqueur codé sont répartis dans une ou plusieurs desdites sous-matrices destinées à être transformées en motifs. En particulier, ledit premier calculateur 211 est capable de décomposer l'image acquise par la caméra 111 en un nombre n d'autres sous-matrices afin que le dispositif d'insertion 212 puisse superposer à chacune de ces autres sous-matrices un motif selon l'invention, ledit motif codant au moins un bit dudit marqueur. Ainsi, à chaque sous-matrice de l'image, i.e. à chacune de ces « autres » sous-matrices correspond et est superposé par le dispositif d'insertion 212 un motif représentant une sous-matrice encodant au moins un bit du marqueur codé dans le domaine fréquentiel. Préférentiellement, ledit marqueur peut comprendre, en plus des bits qui représentent l'identifiant de la caméra et la variable temporelle, une redondance codée dudit identifiant et de la variable temporelle, les bits de cette redondance codée étant eux aussi encodés dans les motifs destinés à être superposés aux sous-matrices constituant l'image (i.e. lesdites autres sous-matrices). En d'autres termes, la présente invention propose, et ledit premier calculateur 211 est en particulier capable, d' « allonger » le code du marqueur codé par des bits représentant une redondance de l'identifiant et de la variable temporelle, notamment de façon à obtenir un marqueur codé comprenant autant de bits qu'il y a de sous-matrices constituant ladite image après décomposition par ledit premier calculateur 211 (par exemple n bits s'il y a n sous-matrices formant ladite image) ou afin de répéter le code dudit marqueur codé dans l'image afin d'augmenter la robustesse de l'encodage à l'extraction (i.e. en réception). En effet, de cette façon, si un des bits du marqueur codé est altéré dans une sous-matrice de l'image sécurisée, il est alors possible de l'extraire d'une autre sous-matrice de l'image sécurisée (sous réserve de détecter l'altération par vérification de la redondance codée par exemple), ladite sous-matrice de l'image sécurisée correspondant à la superposition d'un desdits motifs et d'une des sous-matrices de l'image acquise par la caméra.

La figure 3 présente une image sécurisée par la méthode selon l'invention. Dans cet exemple particulier, des motifs ont été insérés sur les parties gauches et droites supérieures de l'image avec une intensité volontairement augmentée afin de les rendre visibles (cf. respectivement les rectangles A et B en Fig. 3). Optionnellement, le dispositif d'insertion 212 est capable d'insérer un indicateur de présence C du marqueur codé afin de différentier facilement une image sécurisée d'une image non sécurisée.

Le flux vidéo reçu au poste de contrôle 2 est vérifié par extraction et contrôle des données incluses dans le marqueur temporel au moyen du dispositif de contrôle 22. Un dispositif d'acquisition 222 est préférentiellement connecté au dispositif de communication 12 du système vidéo afin d'acquérir le flux d'images sécurisées transmises par le dispositif d'acquisition 11 au dispositif de visualisation 13. Il est à noter que pour cet exemple de réalisation, la sécurisation de la transmission ne s'étend pas à l'écran 131 du dispositif de visualisation. Une alternative permettant de sécuriser toute la chaîne de transmission du flux vidéo jusqu'audit écran 131 est d'acquérir les images sécurisées au moyen dudit dispositif d'acquisition 222 comprenant une caméra configurée pour filmer ledit écran 131, suivi d'une extraction du marqueur codé sur le flux vidéo capturé par ladite camera adaptée pour filmer ledit écran 131. Dans ce cas, l'ensemble de la chaine de transmission du flux vidéo est sécurisée, écran 131 compris.

Chaque image sécurisée acquise par le dispositif d'acquisition 222 est transmise à un dispositif d'extraction 223 capable d'extraire de ladite image sécurisée ledit marqueur codé. Ledit dispositif d'extraction 223 est notamment capable d'extraire le marqueur codé de l'image sécurisée dans le domaine spectral. A cette fin, il peut utiliser par exemple une transformée DCT inverse, ou une transformée de Fourier ou en ondelette. Préférentiellement, le marqueur codé est extrait par comparaison de l'image sécurisée avec une image de référence, ladite image de référence étant libre d'un encodage avec ledit marqueur codé, et représentant par exemple une scène de référence filmée par la caméra 111, ou une image précédemment reçue par le dispositif de communication et libre de tout encodage au moyen dudit marqueur codé. Les données relatives au marqueur codé extraites de l'image sécurisée par ledit dispositif d'extraction 223 sont ensuite transmises au second calculateur 221 pour contrôle de la fraîcheur, de l'origine, et optionnellement de l'intégrité de l'image.

Ledit second calculateur 221 de sécurité est notamment capable de coopérer avec le dispositif de visualisation 13 du système vidéo afin de signaler toute défaillance de la transmission du flux vidéo. Ledit second calculateur 221 est configuré pour vérifier l'origine de l'image sécurisée au moyen de l'identifiant de la caméra et la fraicheur de l'image sécurisée par comparaison de la variable temporelle avec une référence temporelle synchronisée avec ledit premier calculateur 211. En particulier, ledit second calculateur 221 est configuré pour signaler automatiquement une défaillance du système vidéo si au moins une des informations comprises dans le marqueur codé viole un critère de sécurité prédéfini, ou autrement dit, si la variable temporelle et/ou l'identifiant de la caméra extrait du marqueur codé est différente d'un paramétrage de sécurité prédéfini, par exemple si la différence temporelle entre l'acquisition de l'image au moyen du dispositif d'acquisition 11 et l'affichage de ladite image au moyen du dispositif de visualisation 13 excède une valeur prédéfinie et/ou si l'identifiant de la caméra est différent d'un identifiant précédemment extrait pour une image sécurisée pour ladite caméra ou est différent d'un identifiant mémorisé dans le second calculateur ou dans une base de données dudit second calculateur. Optionnellement, l'intégrité de l'image transmise par le système de communication peut également être contrôlée : dans ce cas, le dispositif d'insertion 212 est configuré pour superposer des motifs à ladite image acquise par la caméra 111 de façon à recouvrir intégralement ladite image par lesdits motifs. Dans ce cas, comme le marqueur encodé est réparti dans toute l'image, il sera uniquement possible d'extraire ledit marqueur codé si une image sécurisée intègre est acquise par le dispositif d'extraction. Dans le cas contraire, le marqueur codé sera inextricable de ladite image sécurisée. Préférentiellement, le dispositif d'extraction 223 est configuré pour signaler une défaillance d'extraction d'un marqueur codé, i.e. toute impossibilité d'extraction d'un marqueur codé d'une image sécurisée, ledit signalement étant soit directement envoyé au dispositif de visualisation 13 ou au second calculateur 221 qui transmettra ledit signalement en tant que défaillance du système vidéo.

En résumé, la méthode et le système de sécurisation d'une transmission d'une image vidéo, ainsi que le dispositif de sécurisation et le dispositif de détection selon l'invention présentent plusieurs avantages par rapport aux méthodes et systèmes de sécurisation existant en ce que:
- ils évitent de concevoir un système de sécurisation dont chaque sous-système est sûr de fonctionnement. En effet, l'ensemble du système vidéo est validé en sécurité et non chacun des sous-éléments composant ledit système vidéo. Ce principe de restitution de l'image vidéo permet de s'affranchir des causes de défaillances du système vidéo. Il permet de donner à un opérateur visualisant à distance l'image vidéo d'un objet des informations relatives à l'origine, la fraîcheur, et optionnellement l'intégrité de l'image;
- ils permettent de diagnostiquer automatiquement une défaillance du système vidéo et de déclencher automatiquement une alarme (visuelle, auditive, vibrante, ...) associée par exemple à une mise en état de sureté d'un système de contrôle à distance du véhicule.

## Revendications

1. Méthode de sécurisation d'un système vidéo destiné à transmettre et visualiser à distance une image d'une scène capturée par une caméra (111), ledit système vidéo comprenant un dispositif de capture (11) d'une image de ladite scène au moyen de ladite caméra (111), un dispositif de communication (12) pour transmettre ladite image à un poste de contrôle (2) éloigné, un dispositif de visualisation (13) pour visualiser ladite image audit poste de contrôle (2) éloigné, ladite méthode étant **caractérisée par** les étapes suivantes:
- une génération, au moyen d'un premier calculateur (211) de sécurité et pour ladite image, d'un marqueur codé digitalement en bits, ledit marqueur codé comprenant au moins une information codée en binaire permettant d'identifier la caméra (111) (ci-après dénommée « l'identifiant de la caméra ») ayant pris ladite image et une information codée en binaire permettant d'identifier la date à laquelle l'image a été prise par la caméra (ci-après dénommée « la variable temporelle ») par rapport à une référence temporelle, ledit premier calculateur (211) étant configuré pour synchroniser avec un second calculateur (221) ladite référence temporelle;
- une insertion dudit marqueur codé dans l'image prise par la caméra (111) afin de créer une image sécurisée destinée à être transmise par le dispositif de communication (12) du système vidéo au dispositif de visualisation (13), l'insertion dans ladite image étant réalisée par ajout, pour chaque bit dudit marqueur codé, d'un motif à ladite image dans le domaine spatial, ledit motif étant **caractérisé en ce que** sa conversion dans le domaine spectral est une sous-matrice prédéfinie dont au moins un coefficient fréquentiel encode ledit bit du marqueur codé;
- une transmission de l'image sécurisée au dispositif de visualisation (13);
- une acquisition de ladite image sécurisée par un dispositif d'acquisition (222) en vue d'une extraction du marqueur codé par un dispositif d'extraction (223) ;
- une extraction dudit marqueur codé de ladite image sécurisée par comparaison de l'image sécurisée avec une image non sécurisée de ladite scène reçue précédemment, et une transmission dudit marqueur codé audit second calculateur (221);
- une vérification, par ledit second calculateur (221), de la variable temporelle par comparaison avec ladite référence temporelle et de l'identifiant de la caméra afin de contrôler la fraicheur temporelle de l'image sécurisée et son origine au moyen de l'identifiant;
- un signalement de la défaillance du système vidéo si au moins une des informations comprises dans le marqueur codé viole un critère de sécurité prédéfini.

2. Méthode de sécurisation selon la revendication 1 **caractérisée en ce que** ledit critère de sécurité est au moins l'un des critères suivants:
- une différence temporelle entre la variable temporelle et la référence temporelle inférieure à une valeur prédéfinie;
- l'identifiant de la caméra extrait de l'image sécurisée identique à l'identifiant de la caméra ayant prise l'image.

3. Méthode de sécurisation selon une des revendications 1 ou 2 **caractérisée en ce que** ledit premier calculateur de sécurité est configuré pour produire une redondance codée binaire de l'identifiant de la caméra et de la variable temporelle, et pour étendre la longueur de ladite redondance afin de produire un code comprenant suffisamment de bits pour remplir un ensemble de sous-matrices dans le domaine fréquentiel qui, une fois converties dans le domaine spatial, créeront des motifs aptes à recouvrir toute l'image par superposition avec cette dernière, la méthode comprenant une vérification de l'intégrité de l'image sécurisée obtenue après la superposition desdits motifs sur l'intégralité de ladite image en déterminant, au moyen dudit second calculateur, si des bits du marqueur codé manquent dans l'image sécurisée.

4. Méthode de sécurisation selon une des revendications 1 à 3 **caractérisée par** une sélection, dans une bibliothèque de motifs pré-calculés, de motifs capables d'encoder ledit marqueur codé.

5. Dispositif de contrôle (22) d'une image d'une scène (14) visualisée à distance, ladite image étant susceptible d'être prise par une caméra (111) d'un dispositif de capture (11) d'images d'un système vidéo adapté à une transmission et une visualisation à distance de ladite image, ladite image étant en outre une image sécurisée par un marqueur codé digitalement en bits et comprenant au moins une information codée en binaire permettant d'identifier la caméra (111) (ci-après dénommée « l'identifiant de la caméra ») et une information codée en binaire permettant d'identifier la date à laquelle l'image a été prise par la caméra (111) (ci-après dénommée « la variable temporelle »), l'insertion dudit marqueur codé ayant été réalisée par ajout, pour chaque bit dudit marqueur codé, d'un motif à ladite image dans le domaine spatial, ledit motif étant **caractérisé en ce que** sa conversion dans le domaine spectral est une sous-matrice prédéfinie dont au moins un coefficient fréquentiel encode ledit bit du marqueur codé, le dispositif de contrôle (22) comprenant:
- un dispositif d'acquisition (222) capable d'acquérir ladite image sécurisée transmise à distance par un dispositif de communication (12) du système vidéo;
- un dispositif d'extraction (223) capable d'extraire de ladite image sécurisée ledit marqueur codé par comparaison de l'image sécurisée avec une image non sécurisée de ladite scène (14) reçue précédemment, ledit dispositif d'extraction (223) étant configuré pour transmettre ledit marqueur codé extrait de ladite image sécurisée à un second calculateur (221) de sécurité;
- ledit second calculateur (221) de sécurité destiné à coopérer avec un dispositif de visualisation (13) du système vidéo, ledit second calculateur étant configuré pour coopérer avec un premier calculateur (211) de sécurité afin de synchroniser une référence temporelle, ledit second calculateur (221) étant configuré pour vérifier l'origine de l'image sécurisée au moyen de l'identifiant de la caméra et la fraicheur de l'image sécurisée par comparaison de la variable temporelle avec ladite référence temporelle.

6. Dispositif de contrôle (22) selon la revendication 5 **caractérisé en ce que** le second calculateur (221) de sécurité est configuré pour automatiquement envoyer un signal d'alerte destiné à prévenir un opérateur d'une défaillance du système vidéo si ladite fraicheur et/ou ladite origine est différente d'un paramétrage de sécurité prédéfini.

7. Dispositif de contrôle (22) selon revendication 5 **caractérisé en ce que** ledit second calculateur (221) est configuré pour échanger un ou plusieurs messages codés avec ledit premier calculateur via un dispositif de communication afin de synchroniser ladite référence temporelle.

8. Système de sécurisation d'un système vidéo, ledit système vidéo comprenant un dispositif de capture (11) d'une image d'une scène (14) au moyen d'une caméra (111), un dispositif de communication (12) pour transmettre ladite image à un poste de contrôle (2) éloigné, un dispositif de visualisation (13) pour visualiser ladite image audit poste de contrôle (2) éloigné, ledit système de sécurisation comprenant un dispositif de sécurisation (21) et un dispositif de contrôle (22) selon une des revendications 5 à 7, lesdits dispositifs de sécurisation (21) et de contrôle (22) étant destinés à coopérer l'un avec l'autre afin de permettre la sécurisation de la transmission de ladite image au moyen du système vidéo, ledit dispositif de sécurisation (21) comprenant:
- un premier calculateur (211) de sécurité destiné à coopérer avec une caméra (111) du dispositif de capture (11), ledit premier calculateur (211) étant configuré pour coopérer avec un second calculateur (221) de sécurité afin de synchroniser une référence temporelle, ledit premier calculateur (211) étant configuré pour produire un marqueur codé digitalement en bits et comprenant au moins une information codée en binaire permettant d'identifier la caméra (111)(ci-après dénommée « l'identifiant de la caméra ») et une information codée en binaire permettant d'identifier la date à laquelle l'image a été prise par la caméra (111) (ci-après dénommée « la variable temporelle ») par rapport à ladite référence temporelle;
- un dispositif d'insertion (212) du marqueur codé dans l'image prise par la caméra (111) afin de créer une image sécurisée destinée à être transmise par un dispositif de communication (12) du système vidéo, ledit dispositif d'insertion (212) étant configuré pour insérer dans ladite image, dans le domaine spatial, et pour chaque bit dudit marqueur codé, un motif dont la conversion dans le domaine spectral est une sous-matrice prédéfinie dont au moins un coefficient fréquentiel encode ledit bit du marqueur codé, afin de créer ladite image sécurisée, le dispositif d'insertion (212) étant en outre configuré pour transmettre ladite image sécurisée audit dispositif de communication (12).

9. Système de sécurisation (21) selon la revendication 8 **caractérisé en ce que** ledit premier calculateur (211) est configuré pour échanger un ou plusieurs messages codés avec ledit second calculateur (221) afin de synchroniser ladite référence temporelle.

10. Système de sécurisation (21) selon une des revendications 8 ou 9 **caractérisé en ce que** ledit marqueur codé est protégé par un code garantissant un niveau de sécurité prédéfini.

11. Système de sécurisation (21) selon une des revendications 8 à 10 **caractérisé en ce que** ledit dispositif d'insertion comprend une bibliothèque de motifs dans le domaine spatial, chaque motif étant la conversion dans le domaine spatial d'une sous-matrice dans le domaine spectral, ladite sous-matrice étant prédéfinie pour encoder 1 bit dans un coefficient fréquentiel prédéfini de ladite sous-matrice.

12. Système de sécurisation (21) selon une des revendications 8 à 11 **caractérisé en ce que** ladite sous-matrice est une matrice dont chaque coefficient fréquentiel est un zéro sauf un nombre n de coefficients fréquentiels prédéfinis qui ont une valeur différente de zéro, ladite valeur étant choisie par ledit premier calculateur (211) afin de coder pour chacun des n coefficients fréquentiels un bit différent du marqueur codé.

13. Système de sécurisation (21) selon une des revendications 8 à 12 **caractérisé en ce que** ledit dispositif d'insertion (212) est capable de sélectionner pour chaque bit du marqueur codé un motif dans ladite bibliothèque de motifs en fonction de la valeur du coefficient fréquentiel encodant ledit bit et/ou d'une valeur d'un coefficient fréquentiel de la matrice représentant la conversion dans le domaine fréquentiel de ladite image acquise par la caméra (111).

## Patentansprüche

1. Verfahren zur Sicherung eines Videosystems, das dazu bestimmt ist, ein von einer Kamera (111) erfasstes Bild einer Szene zu übertragen und seine Fernvisualisierung zu bewirken, wobei das Videosystem eine Vorrichtung zur Erfassung (11) eines Bildes der Szene mittels der Kamera (111), eine Kommunikationsvorrichtung (12) zum Übertragen des Bildes an eine entfernte Kontrollstation (2) und eine Visualisierungsvorrichtung (13) zum Visualisieren des Bildes an der entfernten Kontrollstation (2) umfasst, wobei das Verfahren durch die folgenden Schritte gekennzeichnet ist:
- eine Erzeugung mittels eines ersten Sicherheitsrechners (211) und für das Bild, einer digital in Bits codierten Marke, wobei die codierte Marke wenigstens eine binär codierte Information umfasst, die es ermöglicht, die Kamera (111) zu identifizieren (im Folgenden "Kennung der Kamera" genannt), die das Bild aufgenommen hat, und eine binär codierte Information, die es ermöglicht, das Datum bezüglich einer Zeitreferenz zu identifizieren, an dem das Bild von der Kamera aufgenommen worden ist (im Folgenden "die Zeitvariable" genannt), wobei der erste Rechner (211) dafür ausgelegt ist, die Zeitreferenz mit einem zweiten Rechner (221) zu synchronisieren;
- ein Einfügen der codierten Marke in das von der Kamera (111) aufgenommene Bild, um ein gesichertes Bild zu erzeugen, das dazu bestimmt ist, von der Kommunikationsvorrichtung (12) des Videosystems an die Visualisierungsvorrichtung (13) übertragen zu werden, wobei das Einfügen in das Bild durch Hinzufügen, für jedes Bit der codierten Marke, eines Musters zu dem Bild in der Raumdomäne durchgeführt wird, wobei das Muster **dadurch gekennzeichnet ist, dass** seine Konvertierung in die Spektraldomäne eine vordefinierte Untermatrix ist, von der wenigstens ein Frequenzkoeffizient das Bit der codierten Marke codiert;
- eine Übertragung des gesicherten Bildes an die Visualisierungsvorrichtung (13);
- eine Erfassung des gesicherten Bildes durch eine Erfassungsvorrichtung (222) zwecks einer Extraktion der codierten Marke durch eine Extraktionsvorrichtung (223) ;
- eine Extraktion der codierten Marke aus dem gesicherten Bild durch Vergleich des gesicherten Bildes mit einem zuvor empfangenen nicht gesicherten Bild der Szene und eine Übertragung der codierten Marke an den zweiten Rechner (221);
- eine Überprüfung durch den zweiten Rechner (221), der Zeitvariablen durch Vergleich mit der Zeitreferenz und der Kennung der Kamera, um die zeitliche Frische des gesicherten Bildes und seinen Ursprung mittels der Kennung zu kontrollieren;
- eine Signalisierung des Ausfalls des Videosystems, falls wenigstens eine der in der codierten Marke enthaltenen Informationen ein vordefiniertes Sicherheitskriterium verletzt.

2. Verfahren zur Sicherung nach Anspruch 1, **dadurch gekennzeichnet, dass** das Sicherheitskriterium wenigstens eines der folgenden Kriterien ist:
- Eine zeitliche Differenz zwischen der Zeitvariablen und der Zeitreferenz ist kleiner als ein vordefinierter Wert;
- die aus dem gesicherten Bild extrahierte Kennung der Kamera ist mit der Kennung der Kamera, die das Bild aufgenommen hat, identisch.

3. Verfahren zur Sicherung nach einem der Ansprüche 1 oder 2, **dadurch gekennzeichnet, dass** der erste Sicherheitsrechner dafür ausgelegt ist, eine binäre codierte Redundanz der Kennung der Kamera und der Zeitvariablen zu erzeugen und die Länge der Redundanz zu verlängern, um einen Code zu erzeugen, der ausreichend viele Bits umfasst, um eine Menge von Untermatrizen in der Frequenzdomäne zu füllen, welche, nachdem sie in die Raumdomäne konvertiert worden sind, Muster erzeugen, die in der Lage sind, das gesamte Bild durch Überlagerung mit diesem Letzteren zu bedecken, wobei das Verfahren eine Überprüfung der Integrität des gesicherten Bildes umfasst, das nach der Überlagerung der Gesamtheit dieses Bildes mit den Mustern erhalten wurde, indem mittels des zweiten Rechners bestimmt wird, ob Bits der codierten Marke in dem gesicherten Bild fehlen.

4. Verfahren zur Sicherung nach einem der Ansprüche 1 bis 3, **gekennzeichnet durch** eine Auswahl, aus einer Bibliothek von im Voraus berechneten Mustern, von Mustern, die in der Lage sind, die codierte Marke zu codieren.

5. Vorrichtung zur Kontrolle (22) eines durch Fernvisualisierung visualisierten Bildes einer Szene (14), wobei das Bild von einer Kamera (111) einer Vorrichtung zur Erfassung (11) von Bildern eines Videosystems aufgenommen sein kann, das für eine Übertragung und eine Fernvisualisierung des Bildes eingerichtet ist, wobei das Bild außerdem ein Bild ist, das durch eine Marke gesichert ist, die digital in Bits codiert ist und wenigstens eine binär codierte Information, die es ermöglicht, die Kamera (111) zu identifizieren (im Folgenden "Kennung der Kamera" genannt), und eine binär codierte Information, die es ermöglicht, das Datum zu identifizieren, an dem das Bild von der Kamera (111) aufgenommen worden ist (im Folgenden "die Zeitvariable" genannt), umfasst,
wobei das Einfügen der codierten Marke durch Hinzufügen, für jedes Bit der codierten Marke, eines Musters zu dem Bild in der Raumdomäne durchgeführt worden ist, wobei das Muster **dadurch gekennzeichnet ist, dass** seine Konvertierung in die Spektraldomäne eine vordefinierte Untermatrix ist, von der wenigstens ein Frequenzkoeffizient das Bit der codierten Marke codiert, wobei die Kontrollvorrichtung (22) Folgendes umfasst:
- eine Erfassungsvorrichtung (222), die in der Lage ist, das gesicherte Bild zu erfassen, das von einer Kommunikationsvorrichtung (12) des Videosystems fernübertragen wird;
- eine Extraktionsvorrichtung (223), die in der Lage ist, aus dem gesicherten Bild die codierte Marke durch Vergleich des gesicherten Bildes mit einem zuvor empfangenen nicht gesicherten Bild der Szene (14) zu extrahieren, wobei die Extraktionsvorrichtung (223) dafür ausgelegt ist, die aus dem gesicherten Bild extrahierte codierte Marke an einen zweiten Sicherheitsrechner (221) zu übertragen;
- wobei der zweite Sicherheitsrechner (221) dazu bestimmt ist, mit einer Visualisierungsvorrichtung (13) des Videosystems zusammenzuwirken, wobei der zweite Rechner dafür ausgelegt ist, mit einem ersten Sicherheitsrechner (211) zusammenzuwirken, um eine Zeitreferenz zu synchronisieren, wobei der zweite Rechner (221) dafür ausgelegt ist, den Ursprung des gesicherten Bildes mittels der Kennung der Kamera und die Frische des gesicherten Bildes durch Vergleich der Zeitvariablen mit der Zeitreferenz zu überprüfen.

6. Kontrollvorrichtung (22) nach Anspruch 5, **dadurch gekennzeichnet, dass** der zweite Sicherheitsrechner (221) dafür ausgelegt ist, automatisch ein Warnsignal zu senden, das dazu bestimmt ist, einen Bediener von einem Ausfall des Videosystems in Kenntnis zu setzen, falls die Frische und/oder der Ursprung von einer vordefinierten Sicherheitsparametrierung verschieden sind.

7. Kontrollvorrichtung (22) nach Anspruch 5, **dadurch gekennzeichnet, dass** der zweite Sicherheitsrechner (221) dafür ausgelegt ist, eine oder mehrere codierte Nachrichten über eine Kommunikationsvorrichtung mit dem ersten Rechner auszutauschen, um die Zeitreferenz zu synchronisieren.

8. Sicherungssystem eines Videosystems, wobei das Videosystem eine Vorrichtung zur Erfassung (11) eines Bildes einer Szene (14) mittels einer Kamera (111), eine Kommunikationsvorrichtung (12) zum Übertragen des Bildes an eine entfernte Kontrollstation (2) und eine Visualisierungsvorrichtung (13) zum Visualisieren des Bildes an der entfernten Kontrollstation (2) umfasst, wobei das Sicherungssystem eine Sicherungsvorrichtung (21) und eine Kontrollvorrichtung (22) nach einem der Ansprüche 5 bis 7 umfasst, wobei die Sicherungs- (21) und die Kontrollvorrichtung (22) dazu bestimmt sind zusammenzuwirken, um die Sicherung der Übertragung des Bildes mittels des Videosystems zu ermöglichen, wobei die Sicherungsvorrichtung (21) Folgendes umfasst:
- einen ersten Sicherheitsrechner (211), der dazu bestimmt ist, mit einer Kamera (111) der Erfassungsvorrichtung (11) zusammenzuwirken, wobei der erste Rechner (211) dafür ausgelegt ist, mit einem zweiten Sicherheitsrechner (221) zusammenzuwirken, um eine Zeitreferenz zu synchronisieren, wobei der erste Rechner (211) dafür ausgelegt ist, eine Marke zu erzeugen, die digital in Bits codiert ist und wenigstens eine binär codierte Information, die es ermöglicht, die Kamera (111) zu identifizieren (im Folgenden "Kennung der Kamera" genannt), und eine binär codierte Information, die es ermöglicht, das Datum bezüglich einer Zeitreferenz zu identifizieren, an dem das Bild von der Kamera (111) aufgenommen worden ist (im Folgenden "die Zeitvariable" genannt), umfasst,
- eine Vorrichtung zum Einfügen (212) der codierten Marke in das von der Kamera (111) aufgenommene Bild, um ein gesichertes Bild zu erzeugen, das dazu bestimmt ist, von einer Kommunikationsvorrichtung (12) des Videosystems übertragen zu werden, wobei die Vorrichtung zum Einfügen (212) dafür ausgelegt ist, in das Bild, in der Raumdomäne und für jedes Bit der codierten Marke, ein Muster einzufügen, dessen Konvertierung in die Spektraldomäne eine vordefinierte Untermatrix ist, von der wenigstens ein Frequenzkoeffizient das Bit der codierten Marke codiert, um das gesicherte Bild zu erzeugen, wobei die Vorrichtung zum Einfügen (212) außerdem dafür ausgelegt ist, das gesicherte Bild an die Kommunikationsvorrichtung (12) zu übertragen.

9. Sicherungssystem (21) nach Anspruch 8, **dadurch gekennzeichnet, dass** der erste Rechner (211) dafür ausgelegt ist, eine oder mehrere codierte Nachrichten mit dem zweiten Rechner (221) auszutauschen, um die Zeitreferenz zu synchronisieren.

10. Sicherungssystem (21) nach einem der Ansprüche 8 oder 9, **dadurch gekennzeichnet, dass** die codierte Marke durch einen Code geschützt ist, der ein vordefiniertes Sicherheitsniveau garantiert.

11. Sicherungssystem (21) nach einem der Ansprüche 8 bis 10, **dadurch gekennzeichnet, dass** die Vorrichtung zum Einfügen eine Bibliothek von Mustern in der Raumdomäne umfasst, wobei jedes Muster die Konvertierung einer Untermatrix in der Spektraldomäne in die Raumdomäne ist, wobei diese Untermatrix vordefiniert ist, um 1 Bit in einem vordefinierten Frequenzkoeffizienten der Untermatrix zu codieren.

12. Sicherungssystem (21) nach einem der Ansprüche 8 bis 11, **dadurch gekennzeichnet, dass** die Untermatrix eine Matrix ist, in der jeder Frequenzkoeffizient eine Null ist, mit Ausnahme von n vordefinierten Frequenzkoeffizienten, welche einen von null verschiedenen Wert haben, wobei dieser Wert von dem ersten Rechner (211) gewählt wird, um für jeden der n Frequenzkoeffizienten ein anderes Bit der codierten Marke zu codieren.

13. Sicherungssystem (21) nach einem der Ansprüche 8 bis 12, **dadurch gekennzeichnet, dass** die Vorrichtung zum Einfügen (212) in der Lage ist, für jedes Bit der codierten Marke ein Muster in der Bibliothek von Mustern in Abhängigkeit vom Wert des Frequenzkoeffizienten, der dieses Bit codiert, und/oder von einem Wert eines Frequenzkoeffizienten der Matrix auszuwählen, welche die Konvertierung des von der Kamera (111) erfassten Bildes in die Frequenzdomäne darstellt.

## Claims

1. Method for securing a video system designed to send and display an image of a scene captured by a camera (111) remotely, said video system comprising a device (11) for capturing an image of said scene using said camera (111), a communication device (12) for sending said image to a remote control station (2), a display device (13) for displaying said image at said remote control station (2), said method being **characterised by** the following steps:
- generation, using a first securing processor (211) and for said image, of a marker encoded digitally in bits, said encoded marker including at least one item of information encoded in binary that is used to identify the camera (111) (hereinafter referred to as the "identifier of the camera") that took said image and an item of information encoded in binary that is used to identify the date on which the image was taken by the camera (hereinafter referred to as the "time variable") in relation to a time reference, said first processor (211) being designed to synchronise said time reference with a second processor (221),
- insertion of said encoded marker into the image taken by the camera (111) in order to create a secure image designed to be sent by the communication device (12) of the video system to the display device (13), the insertion into said image being carried out by the addition, for each bit of said encoded marker, of a pattern to said image in the spatial domain, said pattern being **characterised in that** the conversion thereof into the spectral domain is a predefined submatrix of which at least one frequency coefficient encodes said bit of the encoded marker,
- transmission of the secure image to the display device (13),
- acquisition of said secure image by an acquisition device (222) to enable extraction of the encoded marker by an extraction device (223),
- extraction of said encoded marker of said secure image by comparison of the secure image with an unsecured image of said scene previously received, and transmission of the encoded marker to said second processor (221),
- verification, by said second processor (221), of the time variable by comparison with said time reference and of the identifier of the camera in order to check the temporal freshness of the secure image and the origin thereof using the identifier,
- flagging a failure of the video system if at least one of the items of information included in the encoded marker violates a predefined security criterion.

2. Securing method according to claim 1, **characterised in that** said security criterion is at least one of the following criteria:
- a time difference between the time variable and the time reference that is less than a predefined value,
- the identifier of the camera extracted from the secure image that is identical to the identifier of the camera that took the image.

3. Securing method according to one of claims 1 or 2, **characterised in that** said first securing processor is designed to produce a binary encoded redundancy of the identifier of the camera and of the time variable, and to extend the length of said redundancy in order to produce a code containing enough bits to fill a set of submatrices in the frequency domain that, once converted into the spatial domain, create patterns designed to cover all of the image by superposition on this latter, the method comprising a verification of the integrity of the secure image obtained after superposition of said patterns on all of said image, by determining, by means of said second processor, whether bits of said encoded marker are missing from the secure image.

4. Securing method according to one of claims 1 to 3, **characterised by** a selection, from a library of pre-processed patterns, of patterns that can be used to encode said encoded marker.

5. Control device (22) for an image of a scene (14) displayed remotely, said image being capturable by a camera (111) of an image capture device (11) of a video system designed for the transmission and remote display of said image, said image also being an image secured by a marker encoded digitally in bits, said encoded marker including at least one item of information encoded in binary that is used to identify the camera (111) (hereinafter referred to as the "identifier of the camera") and an item of information encoded in binary that is used to identify the date on which the image was taken by the camera (111) (hereinafter referred to as the "time variable"), the insertion of said encoded marker having been carried out by the addition, for each bit of said encoded marker, of a pattern to said image in the spatial domain, said pattern being **characterised in that** the conversion thereof into the spectral domain is a predefined submatrix of which at least one frequency coefficient encodes said bit of the encoded marker, the control device (22) comprising:
- an acquisition device (222) that can acquire said secure image sent remotely by a communication device (12) of the video system,
- an extraction device (223) that is able to extract said encoded marker from said secure image by comparison of the secure image with an unsecured image of said scene (14) previously received, said extraction device (223) being designed to send said encoded marker extracted from said secure image to a second securing processor (221),
- said second securing processor (221) that is designed to cooperate with a display device (13) of the video system, said second processor being designed to cooperate with a first securing processor (211) in order to synchronise a time reference, said second processor (221) being designed to verify the origin of the secure image using the identifier of the camera and the freshness of the secure image by comparison of the time variable with said time reference.

6. Control device (22) according to claim 5, **characterised in that** the second securing processor (221) is designed to automatically send a warning signal intended to warn an operator of a failure of the video system if said freshness and/or said origin is different from a predefined security setting.

7. Control device (22) according to claim 5, **characterised in that** said second processor (221) is designed to exchange one or more encoded messages with said first processor via a communication device in order to synchronise said time reference.

8. System for securing a video system, said video system comprising a device (11) for capturing an image of a scene (14) using a camera (111), a communication device (12) for sending said image to a remote control station (2), a display device (13) for displaying said image at said remote control station (2), said securing system including a securing device (21) and a control device (22) according to one of claims 5 to 7, said securing device (21) and control device (22) being designed to cooperate with each other to enable the securing of the transmission of said image using the video system, said securing system (21) comprising:
- a first securing processor (211) that is designed to cooperate with a camera (111) of the capture device (11), said first processor (211) being designed to cooperate with a second securing processor (221) to synchronise a time reference, said first processor (211) being designed to produce a marker encoded digitally in bits, said encoded marker including at least one item of information encoded in binary that is used to identify the camera (111) (hereinafter referred to as the "identifier of the camera") and an item of information encoded in binary that is used to identify the date on which the image was taken by the camera (111) (hereinafter referred to as the "time variable") in relation to said time reference;
- an insertion device (212) for inserting said encoded marker into the image taken by the camera (111) in order to create a secure image designed to be sent by a communication device (12) of the video system, said insertion device (212) being designed to insert a pattern into said image, in the spatial domain and for each bit of said encoded marker, the conversion of said pattern into the spectral domain being a predefined submatrix of which at least one frequency coefficient encodes said bit of the encoded marker, in order to create said secure image, the insertion device (212) also being designed to send said secure image to said communication device (12).

9. Securing system (21) according to claim 8, **characterised in that** said first processor (211) is designed to exchange one or more encoded messages with said second processor (221) in order to synchronise said time reference.

10. Securing system (21) according to one of claims 8 or 9, **characterised in that** said encoded marker is protected by a code guaranteeing a predefined level of security.

11. Securing system (21) according to one of claims 8 to 10, **characterised in that** said insertion device includes a library of patterns in the spatial domain, each pattern being the conversion of a submatrix in the spectral domain into the spatial domain, said submatrix being predefined to encode one bit in a predefined frequency coefficient of said submatrix.

12. Securing system (21) according to one of claims 8 to 11, **characterised in that** said submatrix is a matrix in which each frequency coefficient is a zero except for a number n of predefined frequency coefficients that have a value other than zero, said value being chosen by said first processor (211) to encode a different bit of the encoded marker for each of the n frequency coefficients.

13. Securing system (21) according to one of claims 8 to 12, **characterised in that** said insertion device (212) is able to select a pattern from said pattern library for each bit of the encoded marker as a function of the value of the frequency coefficient encoding said bit and/or a value of a frequency coefficient of the matrix representing the conversion of said image acquired by the camera (111) into the frequency domain.
